# EUROPÄISCHE PATENTSCHRIFT

(11) **EP 3 815 976 B1**
(45) Veröffentlichungstag und Bekanntmachung des Hinweises auf die Patenterteilung: **07.06.2023**
(21) Anmeldenummer: 20202602.7
(22) Anmeldetag: 19.10.2020
(51) Int. Cl.: B60R 7/04, B62D 33/06

(54) **ABLAGEVORRICHTUNG FÜR EIN FAHRERHAUS EINES NUTZFAHRZEUGS**
STORAGE DEVICE FOR A CAB OF A COMMERCIAL VEHICLE
DISPOSITIF DE RANGEMENT POUR UNE CABINE D'UN VÉHICULE COMMERCIAL

(30) Priorität: 30.10.2019 DE 102019007571
(43) Veröffentlichungstag der Anmeldung: 05.05.2021
(73) Patentinhaber: MAN Truck & Bus SE, 80995 München (DE)
(72) Erfinder: Schmitz, Andreas, 80995 München (DE); Huber, Georg, 83043 Bad Aibling (DE)
(74) Vertreter: v. Bezold & Partner Patentanwälte - PartG mbB

(56) Entgegenhaltungen:
- EP-A1- 3 106 350
- EP-A1- 3 486 118
- WO-A1-2017/009682
- GB-A- 2 441 378
- US-A1- 2002 163 218
- US-A1- 2005 116 487

## Beschreibung

Die Erfindung betrifft eine Dachablagevorrichtung für ein Fahrerhaus eines Nutzfahrzeugs.

Ein Fahrerhaus eines Lastkraftwagens kann innen oberhalb der Windschutzscheibe Ablagemöglichkeiten und Aufnahmen für technische Geräte aufweisen. In den Ablagen kann der Fahrer Gegenstände und Utensilien unterbringen. Die technischen Geräte können Fahrtenschreiber, Mautgeräte, Funkgeräte, usw. aufweisen. Diese sollten in direkter Einsicht und Erreichbarkeit des Fahrers liegen.

Aus der DE 199 57 854 B4 ist ein modulares Ablagesystem in Fahrerhäusern von Nutzfahrzeugen bekannt. Das modulare Ablagesystem erstreckt sich innerhalb eines Fahrerhauses eines Nutzfahrzeuges über dessen gesamte Breite quer zur Fahrtrichtung oberhalb einer Windschutzscheibe. Das Ablagesystem weist nach oben offene, aus- und einbaufähige Ablageschalen auf, welche spiegelsymmetrisch und quer zu einer Fahrzeuglängsachse nebeneinander angeordnet sind. Die zwischen Adaptionsteilen und Haltern aufgenommenen seitlichen Ablageschalen sind mittels lösbarer Rastelemente mit den Adaptionsteilen verbunden.

US 2005/0116487 A1 offenbart ein modulares System für ein Fahrzeug nach dem Oberbegriff von Anspruch 1, das ein oder mehrere längliche, modulare Elemente umfasst, die angepasst sind, um mit einem Innenabschnitt eines Fahrzeugs gekoppelt zu werden. Ein oder mehrere, entfernbare Vorrichtungen sind zur Anbringung an einem oder mehreren der Elemente konfiguriert, wobei ein oder mehrere Halter so positioniert sind, dass sie mit den Elementen ausgerichtet sind und mit den Vorrichtungen gekoppelt sind, um die Vorrichtungen an einem oder mehreren der Elemente zu befestigen. Der Erfindung liegt die Aufgabe zu Grunde, eine alternative und/oder verbesserte Ablagevorrichtung zu schaffen.

Die Aufgabe wird gelöst durch die Merkmale des unabhängigen Anspruchs. Vorteilhafte Weiterbildungen sind in den abhängigen Ansprüchen und der Beschreibung angegeben. Gemäß einem Aspekt ist eine Dachablagevorrichtung eines Fahrerhauses eines Nutzfahrzeugs (z. B. Lastkraftwagens) offenbart. Die Ablagevorrichtung weist mehrere Ablagefächer auf, die entlang einer Querachse des Fahrerhauses oder des Nutzfahrzeugs nebeneinander angeordnet sind (z. B. direkt angrenzend aneinander). Die Ablagevorrichtung weist mindestens eine (z. B. lösbare) Steckverbindung auf, die die mehreren Ablagefächer miteinander verbindet, wobei die mindestens eine Steckverbindung bezüglich der Querachse (z. B. in Querrichtung und entgegengesetzt dazu bzw. in beide Richtungen der Querachse) verschiebbar gelagert ist.

Die Ablagevorrichtung ermöglicht mittels der Steckverbindung(en) einen thermischen und ggf. bauteiltoleranzabhängigen Toleranzausgleich zwischen den Ablagefächern. Die Ablagefächer können sich beispielsweise auch im verbauten Zustand noch relativ zueinander bewegen, z. B. aneinander gleiten. Damit können Relativbewegungen aufgrund von thermischem Schrumpfen oder Ausdehnen ermöglicht werden, ohne dass die Ablagevorrichtung dabei plastisch verformt bzw. beschädigt wird. Die mindestens eine Steckverbindung kann zudem eine einfache Vormontage der Ablagefächer ermöglichen.

In einem Ausführungsbeispiel ist die mindestens eine Steckverbindung zum Ausgleich von Relativbewegungen zwischen den mehreren Ablagefächer aufgrund von thermischen Dimensionsänderungen (z. B Ausdehnen oder Schrumpfen) der mehreren Ablagefächer bezüglich der Querachse verschiebbar.

In einem weiteren Ausführungsbeispiel ist die mindestens eine Steckverbindung als Rastverbindung ausgeführt, z. B. mit einer doppelrampenförmigen Rastnase.

In einem weiteren Ausführungsbeispiel weisen die mehreren Ablagefächer, vorzugsweise horizontal ausgerichtete, Anlageflächen zum gegenseitigen Abstützen auf. Vorzugsweise kann die mindestens eine Steckverbindung in den Anlageflächen ausgebildet sein. Beispielsweise können die Anlageflächen jeweils eine Oberseite oder eine Unterseite einer plattenförmigen Erweiterung des jeweiligen Ablagefachs oder eines, vorzugsweise plattenförmigen, Adapterelements bilden.

In einem weiteren Ausführungsbeispiel sind die mehreren Ablagefächer an der mindestens einen Steckverbindung aufeinander geschoben.

In einer Ausführungsform weist die mindestens eine Steckverbindung ein Steckloch und einen Schwenkarm mit einem (z. B. endseitigen) Steckabschnitt zum Einstecken in das Steckloch (bzw. eingesteckt in das Steckloch) auf.

In einer Weiterbildung ist der Schwenkarm in einer Vertikalrichtung und/oder um eine Horizontalachse verschwenkbar.

In einer weiteren Ausführungsform ist der Schwenkarm elastisch verschwenkbar und/oder elastisch vorgespannt.

In einer weiteren Ausführungsform bilden der Schwenkarm und der Steckabschnitt zusammen eine Rastnase.

In einer Ausführungsvariante ist das Steckloch horizontal ausgerichtet.

In einer weiteren Ausführungsvariante sind das Steckloch und der Schwenkarm in einander gegenüberliegenden Anlageflächen der mehreren Ablagefächer ausgebildet.

In einer weiteren Ausführungsvariante ist das Steckloch einem Ablagefach der mehreren Ablagefächer und der Schwenkarm einem dazu benachbarten Ablagefach der mehreren Ablagefächer zugeordnet.

In einer weiteren Ausführungsvariante ist der Steckabschnitt an einem freien Ende des Schwenkarms angeordnet.

In einem Ausführungsbeispiel ist der Steckabschnitt rampenförmig (z. B. doppelrampenförmig), konusförmig, nockenförmig, domförmig und/oder sich verjüngend ausgeführt.

In einem weiteren Ausführungsbeispiel ist der Steckabschnitt unter einer Wirkung des Schwenkarms selbstzentrierend in dem Steckloch.

In einem weiteren Ausführungsbeispiel beaufschlagt bei einer Relativbewegung zwischen dem Steckloch und dem Schwenkarm bezüglich der Querachse das Steckloch den Schwenkarm zu einer Vertikalschwenkbewegung. Vorzugweise kann der Steckabschnitt dabei in Eingriff mit dem Steckloch bleiben.

In einer Ausführungsform weisen die mehreren Ablagefächer zwei äußere Ablagefächer und ein mittleres Ablagefach, das zwischen den zwei äußeren Ablagefächern angeordnet ist, auf. Vorzugsweise kann die mindestens eine Steckverbindung mehrere Steckverbindungen aufweisen, die das mittlere Ablagefach mit den zwei äußeren Ablagefächern verbindet.

In einer Weiterbildung ist ein Ablagefach der zwei äußeren Ablagefächer als ein Geräteträger (z. B. für ein Funkgerät, ein Mautgerät und/oder einen Tachographen) ausgeführt. Vorzugsweise kann der Geräteträger mittels eines ersten, vorzugsweise plattenförmigen, Adapterelements linksseitig des mittleren Ablagefachs an das mittlere Ablagefach steckbar (z. B. mittels der mindestens einen Steckverbindung) sein. Vorzugsweise kann der Geräteträger mittels eines zweiten, vorzugsweise plattenförmigen, Adapterelements rechtsseitig des mittleren Ablagefachs an das mittlere Ablagefach steckbar sein (z. B. mittels der mindestens einen Steckverbindung). Es ist möglich, dass die Adapterelemente einen Teil der mindestens einen Steckverbindung aufweisen, z. B. ein Steckloch.

In einer weiteren Ausführungsform bilden die mehreren Ablagefächer mittels der mindestens einen Steckverbindung eine Vormontageeinheit, die als Ganzes montierbar ist. Damit kann die Montage der Ablagevorrichtung vereinfacht werden.

In einer Weiterbildung sind die mehreren Ablagefächer in der Vormontageeinheit in einer, vorzugsweise selbstzentrierenden (z. B. bezüglich der mindestens einen Steckverbindung), Nulllage zueinander vormontiert, wobei die mindestens eine Steckverbindung aus der Nulllage heraus eine Relativbewegung zwischen den Ablagefächern in beide Richtungen entlang der Querachse (bzw. in Querrichtung und entgegengesetzt dazu) ermöglicht.

In einer weiteren Ausführungsform weist die Ablagevorrichtung ferner eine Frontblende (z. B. Dekorblende) auf, die die mehreren Ablagefächer verkleidet. Vorzugsweise kann mindestens eine weitere (z. B. lösbare) Steckverbindung die Frontblende mit den Ablagefächern verbinden. Bevorzugt kann die mindestens eine weitere Steckverbindung bezüglich der Querachse verschiebbar gelagert sein, vorzugsweise zum Ausgleich von Relativbewegungen zwischen der Frontblende und den mehreren Ablagefächer aufgrund von thermischen Dimensionsänderungen der Frontblende und/oder der mehreren Ablagefächer bezüglich der Querachse. Somit kann ebenfalls ein thermischer Toleranzausgleich zwischen der Frontblende und den Ablagefächern ermöglicht werden.

In einer Weiterbildung ist die Frontblende integral-einstückig ausgeführt, verkleidet die Frontblende alle Ablagefächer der mehreren Ablagefächer, erstreckt sich die Frontblende entlang einer gesamten Breite der mehreren Ablagefächer und/oder verkleidet die Frontblende die mehreren Ablagefächer frontseitig.

In einer Ausführungsvariante ist die mindestens eine weitere Steckverbindung als eine Rastverbindung ausgeführt, die mindestens eine weitere Steckverbindung ist in mindestens einem Langloch bezüglich der Querachse verschiebbar gelagert und/oder die mindestens eine weitere Steckverbindung ist uneinsehbar auf einer Innenseite der Frontblende angeordnet.

In einer weiteren Ausführungsvariante weist mindestens ein Ablagefach der mehreren Ablagefächer ein Blechversteifungsteil auf, in dem vorzugsweise mindestens ein Langloch angeordnet ist, das eine Steckverbindung der mindestens einen weiteren Steckverbindung bezüglich der Querachse verschiebbar lagert.

In einer weiteren Ausführungsvariante weist die mindestens eine weitere Steckverbindung einen Zapfen (z. B mit stabförmigem, Doppel-T-förmigem oder H-förmigem Querschnitt) und/oder ein Klammerelement, vorzugweise ein Omega-Klammerelement, auf.

In einem Ausführungsbeispiel weist die mindestens eine weitere Steckverbindung einen in einem entlang der Querachse ausgerichteten Langloch verschiebbar gelagerten Zapfen und ein Klammerelement, das auf den Zapfen lösbar aufgesteckt ist, auf.

In einem weiteren Ausführungsbeispiel weist die Ablagevorrichtung ferner eine Bodenverkleidung (z. B. Windlaufverkleidung) auf, die vorzugsweise die mehreren Ablagefächer von unten verkleidet. Bevorzugt kann die Bodenverkleidung bezüglich der Querachse verschiebbar mit der Frontblende verbunden sein, vorzugsweise zum Ausgleich von Relativbewegungen zwischen der Frontblende und der Bodenverkleidung aufgrund von thermischen Dimensionsänderungen der Frontblende und/oder der Bodenverkleidung bezüglich der Querachse. Somit kann ebenfalls ein thermischer Toleranzausgleich zwischen der Frontblende und der Bodenverkleidung ermöglicht werden.

In einer Weiterbildung ist die Bodenverkleidung dadurch bezüglich der Querachse verschiebbar mit der Frontblende verbunden, dass die Bodenverkleidung die Frontblende entlang der Querachse umgreift, vorzugsweise gabelförmig, V-förmig, U-förmig oder C-förmig. Alternativ kann die Frontblende die Bodenverkleidung beispielsweise entlang der Querachse umgreifen, vorzugsweise gabelförmig, V-förmig, U-förmig oder C-förmig.

Es ist möglich, dass die Bodenverkleidung integral-einstückig ausgeführt ist, die Bodenverkleidung alle Ablagefächer der mehreren Ablagefächer verkleidet, die Bodenverkleidung sich entlang einer gesamten Breite der mehreren Ablagefächer erstreckt, und/oder die Bodenverkleidung die mehreren Ablagefächer von unten verkleidet.

Es ist auch möglich, dass die Bodenverkleidung mindestens eine Sonnenblende, ein elektrisches Sonnenrollo, eine Umgebungserfassungssensorik, eine drahtlose Kommunikationsschnittstelle, eine Vorhangschiene und/oder einen Lautsprecher trägt, vorzugsweise von unten zugängig und/oder austauschbar.

Gemäß einem weiteren Aspekt ist ein Kraftfahrzeug, ein Nutzfahrzeug (z. B. ein Lastkraftwagen) offenbart. Das Kraftfahrzeug weist ein Dach (z. B. ein Fahrerhausdach) auf. Das Kraftfahrzeug weist eine Ablagevorrichtung wie hierin offenbart auf, wobei die Ablagevorrichtung vorzugsweise in dem Dach angeordnet ist.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Explosionsdarstellung einer Ablagevorrichtung gemäß einem Ausführungsbeispiel der vorliegenden Offenbarung;
- Figur 2: eine perspektivische Zusammenbaudarstellung der beispielhaften Ablagevorrichtung;
- Figur 3: eine perspektivische Darstellung eines Versteifungsbauteils der beispielhaften Ablagevorrichtung;
- Figur 4: eine perspektivische Darstellung eines weiteren Versteifungsbauteils der beispielhaften Ablagevorrichtung;
- Figur 5: eine Detaildarstellung eines Details A aus Figur 1;
- Figur 6: eine Detaildarstellung eines Details B aus Figur 1;
- Figur 7: eine Frontansicht der beispielhaften Ablagevorrichtung in einem Einbauzustand in einem Dach eines Fahrerhauses;
- Figur 8: eine Schnittdarstellung entlang einer Linie C-C in Figur 7;
- Figur 9: eine Detaildarstellung eines Details D aus Figur 8; und
- Figur 10: eine Schnittdarstellung entlang einer Linie E-E in Figur 9.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

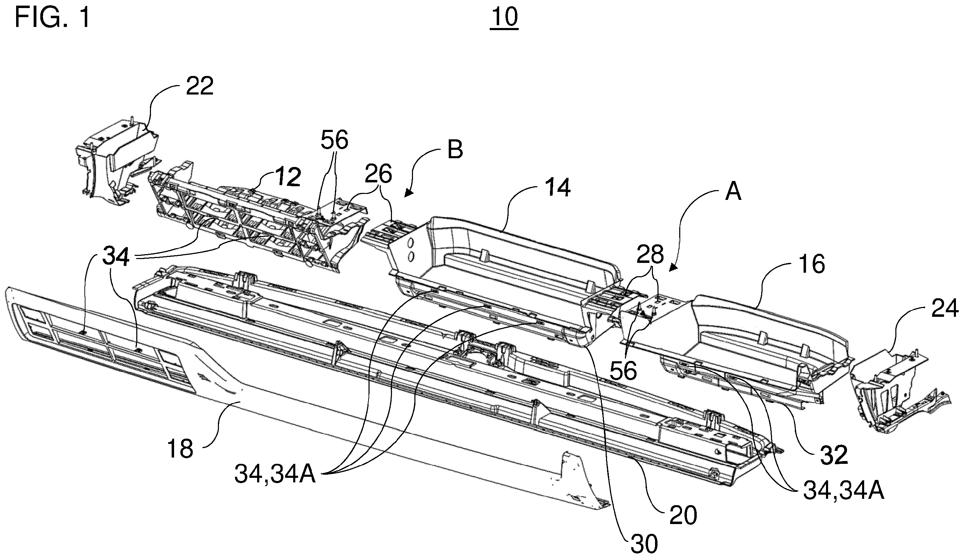

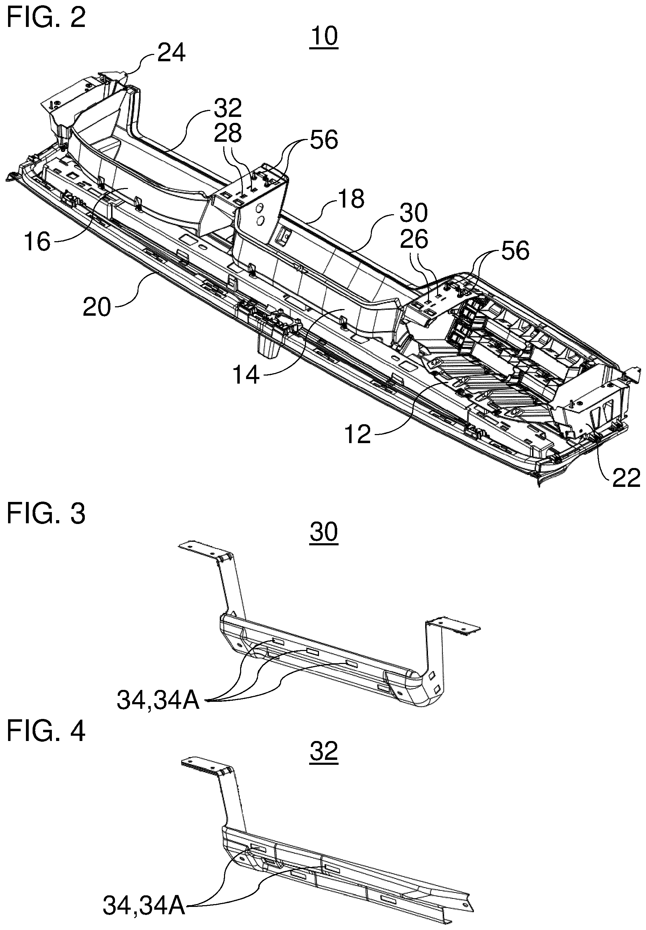

Die Figuren 1 und 2 zeigen eine Ablagevorrichtung 10 für ein Kraftfahrzeug. Die Ablagevorrichtung 10 ist als eine Dachablagevorrichtung eines Fahrerhauses eines Lastkraftwagens ausgeführt, wie dargestellt ist. Die Dachablagevorrichtung kann oberhalb einer Windschutzscheibe des Fahrerhauses angeordnet werden. Im Einbauzustand kann sich die Ablagevorrichtung 10 entlang einer gesamten Breite des Fahrerhauses entlang der Querachse des Fahrerhauses bzw. quer zur Längsachse des Kraftfahrzeugs erstrecken. Es versteht sich, dass die hierin offenbarten Techniken allerdings auch auf andere Ablagevorrichtungen für Kraftfahrzeuge, vorzugsweise Nutzfahrzeuge (z. B. Lastkraftwagen oder Omnibussen) anwendbar sind.

Die Ablagevorrichtung 10 weist mehrere Ablagefächer 12, 14, 16 auf. Die Ablagevorrichtung 10 kann zweckmäßig zudem eine Frontblende 18 und eine Bodenverkleidung 20 aufweisen. Zusätzlich kann die Ablagevorrichtung 10 beispielsweise zwei außenseitige Adapterelemente 22, 24 aufweisen.

Die Ablagefächer 12, 14, 16 weisen ein erstes Ablagefach 12, ein zweites Ablagefach 14, und ein drittes Ablagefach 16 auf. Es ist auch möglich, dass die Ablagevorrichtung 10 mehr oder weniger als drei Ablagefächer aufweist. Die Ablagefächer 12, 14, 16 können vorzugsweise als Kunststoffteile ausgeführt sein, z. B. als Kunststoffspritzgussteile.

Die Ablagefächer 12, 14, 16 sind entlang einer Querachse (z. B. bezüglich der Ablagevorrichtung 10 oder des Fahrerhauses) nebeneinander angeordnet. Das zweite Ablagefach 14 ist mittig zwischen dem ersten Ablagefach 12 und dem dritten Ablagefach 16 angeordnet. Das erste Ablagefach 12 kann auf einer Fahrerseite des Kraftfahrzeugs angeordnet sein. Das dritte Ablagefach 16 kann auf einer Beifahrerseite des Kraftfahrzeugs angeordnet sein. Das zweite Ablagefach 14 kann dazwischen angeordnet sein.

Die Ablagefächer 12, 14, 16 können zur Ablage bzw. Aufnahme von Geräten, Gegenständen und Gepäck ausgeführt sein. Das zweite und das dritte Ablagefach 14, 16 sind beispielhaft als Staufächer ausgeführt. Das erste Ablagefach 12 ist beispielhaft als ein Geräte-Ablagefach bzw. ein Geräteträger, insbesondere ein DIN-Geräteträger, ausgeführt. In dem Geräteträger kann beispielsweise ein Funkgerät, ein Mautgerät und/oder ein Tachograph bzw. Fahrtenschreiber aufgenommen werden.

Die Ablagefächer 12, 14, 16 können zwischen den beiden Adapterelementen 22, 24 angeordnet sein. Über die Adapterelemente 22, 24 können die Ablagefächer 12, 14, 16 an einer Fahrerhauskarosserie angebracht werden. Die Adapterelemente 22, 24 können die Ablagevorrichtung 10 an entgegengesetzten Querenden der Ablagevorrichtung 10 begrenzen. Das Adapterelement 22 kann vorzugsweise lösbar außen an dem Ablagefach 12 angebracht sein, z. B. mittels einer Schraubverbindung und/oder einer Rastverbindung. Das Adapterelement 24 kann vorzugsweise lösbar außen an dem Ablagefach 16 angebracht sein, z. B. mittels einer Schraubverbindung und/oder einer Rastverbindung.

Die Ablagefächer 12, 14, 16 sind mittels mehrerer Steckverbindungen 26, 28 lösbar und relativ zueinander bewegbar miteinander verbindbar, insbesondere aneinander anbringbar. Im Einzelnen ist das erste Ablagefach 12 mittels zweier Steckverbindungen 26 mit dem zweiten Ablagefach 12 verbindbar. Das dritte Ablagefach 16 ist mittels zweier Steckverbindungen 28 mit dem zweiten Ablagefach 12 verbindbar. Die Steckverbindungen 26, 28 sind bezüglich der Querachse verschiebbar gelagert. Dies ermöglicht ein Ausgleichen von Relativbewegungen zwischen den mehreren Ablagefächern 12, 14, 16 aufgrund von thermischen Dimensionsänderungen der mehreren Ablagefächer 12, 14, 16 bezüglich der Querachse. Es ist möglich, dass die Ablagevorrichtung 10 mehr oder weniger als die dargestellten Steckverbindungen 26, 28 aufweist.

Es ist möglich, dass die Ablagefächer 12, 14, 16 zumindest teilweise ein Blechversteifungsteil 30, 32 zum Versteifen des jeweiligen Ablagefachs und der Ablagevorrichtung 10 aufweisen. Im Ausführungsbeispiel weist das zweite Ablagefach 14 das Blechversteifungsteil 30 auf. Das dritte Ablagefach 16 weist das Blechversteifungsteil 32 auf. Die Blechversteifungsteile 30, 32 sind einzeln in den Figuren 3 und 4 dargestellt.

Die Blechversteifungsteile 30, 32 können frontseitig am jeweiligen Ablagefach 14, 16 angeordnet sein. Die Blechversteifungsteile 30, 32 können lösbar angebracht sein, z. B. mittels Steckverbindungen oder mittels Schraubverbindungen. Das Blechversteifungsteil 30 kann beispielsweise U-förmig sein. Das Blechversteifungsteil 32 kann beispielsweise L-förmig sein.

Es ist möglich, dass unterschiedliche breite Varianten für das zweite Ablagefach 14 existieren, um unterschiedlich breite Ablagevorrichtungen z. B. für unterschiedlich breite Fahrerhäuser von Nutzfahrzeugen zu schaffen.

Die Frontblende 18 ist frontseitig an den Ablagefächern 12, 14, 16 montiert. Die Frontblende 18 verkleidet Stirnflächen der Ablagefächer 12, 14 16 frontseitig. Die Frontblende 18 kann vorzugsweise integral-einstückig ausgeführt sein. Die Frontblende 18 kann sich entlang einer gesamten Breite der Ablagefächer 12, 14, 16 erstrecken. Die Frontblende 18 kann als eine Dekorblende ausgeführt sein. Im Bereich des ersten Ablagefachs 12 kann die Frontblende 18 mehrere Durchgangslöcher zum Ein- und Ausbauen von Geräten für das als Geräteträger ausgeführte erste Ablagefach 12 aufweisen. Von Geräten unbenutzte Durchgangslöcher können beispielsweise mit lösbaren Deckeln abgedeckt werden.

Die Frontblende 18 ist mittels mehrerer Steckverbindungen 34 lösbar und relativ zu den Ablagefächern 12, 14, 16 bewegbar mit den Ablagefächern 12, 14, 16 verbindbar, insbesondere aneinander angebracht. Im Einzelnen kann die Frontblende 18 jeweils mittels der mehreren Steckverbindungen 34 mit jedem der Ablagefächer 12, 14, 16 verbunden sein. Bevorzugt ist die Frontblende 18 mittels mehrerer Steckverbindungen 34 mit den Blechversteifungsteilen 30, 32 der Ablagefächer 14, 16 verbunden.

Die Steckverbindungen 34 sind bezüglich der Querachse verschiebbar gelagert. Dies ermöglicht ein Ausgleichen von Relativbewegungen zwischen den mehreren Ablagefächern 12, 14, 16 und der Frontblende 18 aufgrund von thermischen Dimensionsänderungen der mehreren Ablagefächer 12, 14, 16 und der Frontblende 18 bezüglich der Querachse. Es ist möglich, dass die Ablagevorrichtung 10 mehr oder weniger als die dargestellten Steckverbindungen 34 aufweist.

Die Bodenverkleidung 20 ist unterhalb der Ablagefächer 12, 14, 16 angeordnet. Die Bodenverkleidung 20 verkleidet die Ablagefächer 12, 14 16 von unten. Die Bodenverkleidung 20 kann beispielsweise zusätzlich einen oberen Querträger (bzw. einen Windlauf), der eine Windschutzscheibenöffnung des Fahrerhauses oberseitig begrenzt, von unten verkleiden. Die Bodenverkleidung 20 kann vorzugsweise integral-einstückig ausgeführt sein. Die Bodenverkleidung 20 kann sich entlang einer gesamten Breite der mehreren Ablagefächer 12, 14, 16 erstrecken.

Die Bodenverkleidung 20 ist bezüglich der Querachse verschiebbar mit der Frontblende 18 verbunden. Dies ermöglicht ein Ausgleichen von Relativbewegungen zwischen der Frontblende 18 und der Bodenverkleidung 20 aufgrund von thermischen Dimensionsänderungen der Frontblende 18 und der Bodenverkleidung 20 bezüglich der Querachse. Es ist möglich, dass die Bodenverkleidung 20 zusätzlich von unten an den Ablagefächern 12, 14, 16 angebracht ist, vorzugsweise derart, dass eine Relativbewegung zwischen den Ablagefächern 12, 14, 16 und der Bodenverkleidung 20 aufgrund von thermischen Dimensionsänderungen der Ablagefächer 12, 14, 16 und der Bodenverkleidung 20 bezüglich der Querachse ermöglicht wird.

An der Bodenverkleidung 20 können unterschiedliche Komponenten vorzugsweise lösbar befestigt sein. Beispielsweise kann die Bodenverkleidung 20 mindestens eine Sonnenblende, ein elektrisches Sonnenrollo, eine Vorhangschiene, einen Lautsprecher, eine Umgebungserfassungssensorik und/oder eine drahtlose Kommunikationsschnittstelle tragen. Dadurch kann die Bodenverkleidung 20 neben der Verkleidungsfunktion weitere Funktionen in sich integrieren. Es ist möglich, dass die Komponenten zumindest teilweise von unten an der Bodenverkleidung 20 angebracht sind, z. B. mittels lösbarer Steck-, Rast- oder Schraubverbindungen. Dadurch sind die Komponenten auch im Einbauzustand der Ablagevorrichtung 10 im Fahrerhaus von unten zugängig und können ohne Demontage der Ablagevorrichtung 10 beispielsweise repariert oder ausgetauscht werden.

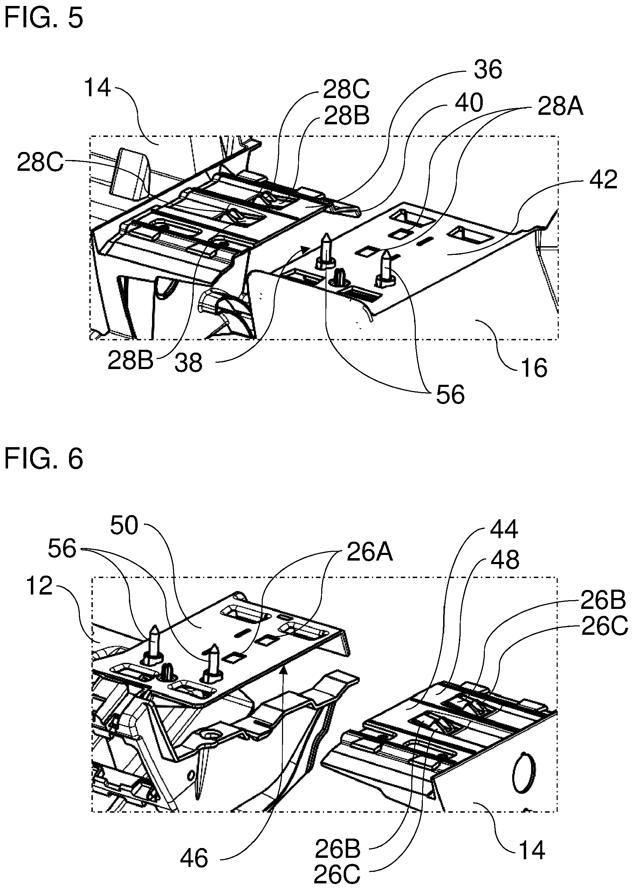

Die Figur 5 zeigt ein Ausführungsbeispiel für die Steckverbindungen 28 zwischen dem zweiten Ablagefach 14 und dem dritten Ablagefach 16.

Die Steckverbindungen 28 weisen jeweils ein Steckloch 28A, einen Schwenkarm 28B und einen Steckabschnitt (Eingriffsabschnitt) 28C auf.

Die Schwenkarme 28B sind elastisch in einer Vertikalrichtung bzw. um eine Horizontalachse verschwenkbar. Die Schwenkarme 28B können bei einer Vertikalbelastung von oben, insbesondere auf den Steckabschnitt 28C, entgegen einer elastischen Vorspannung der Schwenkarme 28B nach unten schwenken. Bei Wegfall der Vertikalbelastung können die Schwenkarme 28B wieder elastisch nach oben schwenken.

Die Steckabschnitte 26C sind an einem freien Ende der Schwenkarme 28B angeordnet. Die Steckabschnitte 28C sind rampenförmig (z. B. doppelrampenförmig). Die Steckabschnitte 28C verjüngen sich beispielsweise nach oben hin, z. B. konusförmig, nockenförmig oder domförmig. Diese sich verjüngende Form der Steckabschnitte 28C ermöglicht eine Selbstzentrierung der Steckabschnitte 28C in den Stecklöchern 28A. Die Steckabschnitte 28C können von unten in die Stecklöcher 28A eingreifen. Eine umgekehrte Anordnung ist beispielsweise auch möglich. Die Stecklöcher 28A können im Wesentlichen vertikal bzw. in einer Horizontalebene liegend ausgerichtet sein.

Das zweite Ablagefach 14 weist eine Anlagefläche 36 auf. Das dritte Ablagefach 16 weist eine in Figur 5 verdeckte Anlagefläche 38 auf.

Die Anlagefläche 36 ist als eine Oberseitenfläche einer plattenförmigen Erweiterung 40 des zweiten Ablagefachs 14 ausgeführt. Die Anlagefläche 38 ist als Unterseite einer plattenförmigen Erweiterung 42 des dritten Ablagefachs 16 ausgeführt.

Die Schwenkarme 28B und die Steckabschnitte 28C sind in der Anlagefläche 36 bzw. der entsprechenden plattenförmigen Erweiterung 40 des zweiten Ablagefachs 14 ausgebildet. Das Steckloch 28A ist in der Anlagefläche 38 bzw. der entsprechenden plattenförmigen Erweiterung 42 des dritten Ablagefachs 16 ausgebildet. Eine vertauschte Anordnung ist beispielsweise ebenfalls möglich.

Im aneinander montierten Zustand liegen die Anlagefläche 36, 38 aneinander an und der Steckabschnitt 28C ist im Steckloch 28A angeordnet. Zum Montieren können die plattenförmigen Erweiterungen 40, 42 in einer Richtung der Querachse aufeinander geschoben werden, bis die Steckabschnitte 28C in die Stecklöcher 28A eingreifen. Beim Aufeinanderschieben werden die Schwenkarme 28B nach unten weggedrückt, bis die Steckabschnitte 28C schließlich in die Stecklöcher 28A eingreifen. Die Steckabschnitte 28C rasten unter der Wirkung der nach oben drückenden Schwenkarme 28B in die Stecklöcher 28A ein. Die Schwenkarme 28B schwenken dadurch wieder nach oben.

Wie bereits erwähnt, ermöglichen die Steckverbindungen 28 eine zerstörungsfreie Relativbewegung bzw. ein Rutschen/Gleiten des zweiten und dritten Ablagefachs 14, 16 zueinander aufgrund von thermischen Größenänderungen der Ablagefächer 14, 16. Im Einzelnen wird diese Funktion dadurch ermöglicht, dass die Anlageflächen 36, 38 bezüglich der Querachse aneinander gleiten können (z. B. aufeinander zu oder voneinander weg) und die Schwenkarme 28B dabei von der plattenförmigen Erweiterung 42 nach unten weggedrückt werden können. Die Steckverbindungen 28 werden dabei nicht gelöst. Stattdessen bleibt der Steckabschnitt 28C im Eingriff mit dem Steckloch 28C, wenn auch weniger tief bzw. stark. Dies wird durch die sich verjüngende Form der Steckabschnitte 28C ermöglicht.

Die Figur 6 zeigt ein Ausführungsbeispiel für die Steckverbindungen 26 zwischen dem ersten Ablagefach 12 und dem zweiten Ablagefach 14.

Die Steckverbindungen 26 können wie die Steckverbindungen 28 ausgeführt sein und funktionieren. Unter anderem können dafür Stecklöcher 26A, Schwenkarme 26B, Steckabschnitte 26C, Anlageflächen 44 und 46 sowie eine plattenförmige Erweiterung 48 des zweiten Ablagefachs 14 vorgesehen sein.

Ein Unterschied zwischen den Steckverbindungen 26 und 28 kann darin bestehen, dass die Stecklöcher 26A nicht in einer plattenförmigen Erweiterung des ersten Ablagefachs 12 ausgebildet sind, sondern in einer Adapterplatte 50. Die Adapterplatte 50 kann an einer dem zweiten Ablagefach 14 zugewandten Seite des ersten Ablagefachs 12 befestigt sein, z. B. mittels mindestens einer Schraubverbindung oder Steckverbindung. Die Adapterplatte 50 kann somit die Funktionsweise der plattenförmigen Erweiterung 42 des dritten Ablagefachs 16 übernehmen.

Die Verwendung der Adapterplatte 50 kann eine Verwendung des ersten Ablagefachs 14 jeweils auf einer Fahrerseite bei einem Rechtslenker-Kraftfahrzeug und bei einem Linkslenker-Kraftfahrzeug ermöglichen. Damit kann das vergleichsweise aufwendig herzustellende, als Geräteträger ausgeführte erste Ablagefach 12 als Gleichteil sowohl in Rechtslenker-Kraftfahrzeugen als auch Linkslenker-Kraftfahrzeugen verwendet werden. Bei Verwendung in einem Rechtslenker-Kraftfahrzeug kann auf einfache Weise eine angepasste (zweite) Adapterplatte (nicht dargestellt) an einer linken Außenseite des ersten Ablagefachs 14 befestigt werden, die eine lösbare Steckverbindung mit dem zweiten Ablagefach 14 von der rechten Seite aus ermöglicht. Das erste Ablagefach 12 kann somit mittels der Adapterplatte 50 linksseitig des zweiten Ablagefachs 14 an das zweite Ablagefach 14 steckbar sein. Außerdem kann das erste Ablagefach 12 mittels der weiteren Adapterplatte rechtsseitig des zweiten Ablagefachs 14 an das zweite Ablagefach 14 steckbar sein.

Vorzugsweise bilden die mehreren Ablagefächer 12, 14, 16 mittels der Steckverbindungen 26, 28 eine Vormontageeinheit, die als Ganzes im Fahrerhaus montierbar ist.

Als Vormontageeinheit können die mehreren Ablagefächer 12, 14, 16 in einer Nulllage zueinander vormontiert sein. Die Ablagefächer 12, 14, 16 können dann in der Nulllage im Fahrerhaus montiert werden. In der Nulllage verbinden die Steckverbindungen 26 und 28 die Ablagefächer 12, 14, 16 derart, dass die Steckverbindungen 26, 28 aus der Nulllage heraus eine Relativbewegung zwischen den Ablagefächern 12, 14, 16 bezüglich beider Richtungen der Querachse ermöglichen. Die Nulllage kann durch die sich verjüngende Form der Steckabschnitte 26C, 28C selbstzentrierend sein. In der Nulllage können die Schwenkarme 26B, 28B am weitesten nach oben geschwenkt sein. In der Nulllage können die Steckabschnitte 26C, 28C am tiefsten in die Stecklöcher 26A, 28A eingreifen.

Zum Einbauen der Vormontageeinheit kann ein Fahrerhausdach über Kopf ausgerichtet sein. In der über-Kopf-Ausrichtung kann das Fahrerhausdach relativ zu einer Normalausrichtung zwischen 90° und 270° gedreht sein. Die Vormontageeinheit kann dann einfach als Ganzes in das Fahrerhausdach eingebaut werden, ohne dass hierfür eine über-Kopf-Arbeit für den Monteur erforderlich ist.

Es ist möglich, dass die Vormontageeinheit zusätzliche Komponenten aufweist, z. B. die Frontblende 18, die Bodenverkleidung 20, das Adapterelement 22 und/oder das Adapterelement 24, wobei die Adapterelemente 22, 24 ebenfalls mit Steckabschnitten und Stecklöchern verbunden sein können.

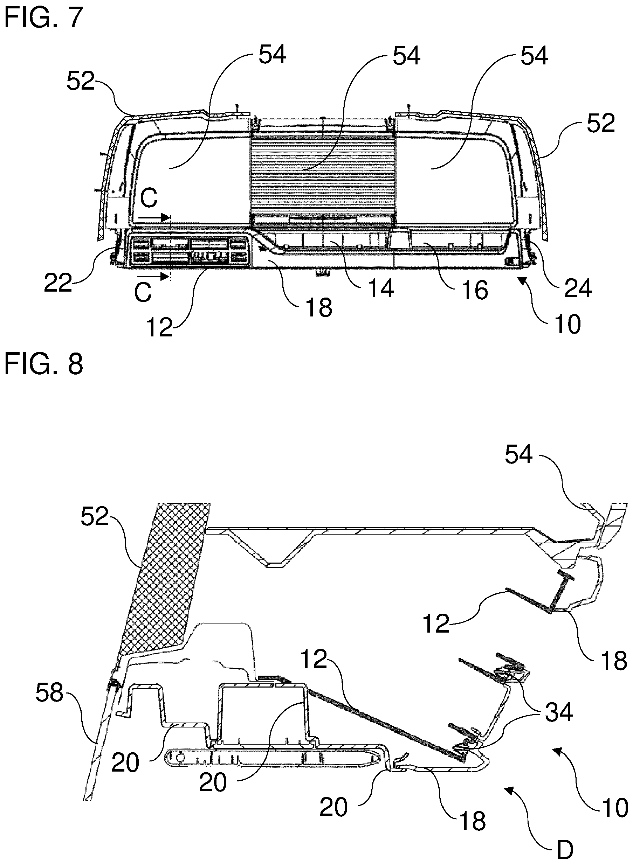

Die Figur 7 zeigt die Ablagevorrichtung 10 in einer Einbausituation. Die Ablagevorrichtung 10 kann in einem Fahrerhausdach 52 eines Fahrerhauses eines Lastkraftwagens eingebaut sein. Die Ablagevorrichtung 10 ist seitlich mittels der Adapterelemente 22, 24 an dem Fahrerhausdach 52 befestigt. Es ist möglich, dass die Ablagevorrichtung 10 von unten bzw. oberseitig an weiteren Dachstaufächer 54 befestigt ist, z. B. wenn das Fahrerhausdach 52 als ein Hochdach (wie ein Figur 7) oder ein Mittelhochdach ausgeführt ist. Die weiteren Dachstaufächer 54 können beispielsweise mit Deckeln oder Rollladen verschließbar sein. Es ist auch möglich, dass die Ablagevorrichtung 10 von unten ohne Zwischenanordnung weiterer Dachstaufächer an dem Fahrerhausdach befestigt ist, z. B. wenn das Fahrerhausdach als ein Niedrigdach bzw. Flachdach ausgeführt ist.

Damit kann die Ablagevorrichtung 10 in einem Flachdach, Mittelhochdach oder Hochdach verwendet werden. Die Ablagevorrichtung 10 kann mit wenigen Modifikationen sowohl für Linkslenker-Fahrzeuge als auch für Rechtslenker-Fahrzeuge verwendet werden, z. B. durch die Möglichkeit der Verwendung des ersten Ablagefachs 12 linksseitig oder rechtsseitig des zweiten Ablagefachs 14 durch die Anbindung mittels der Adapterplatte 50. Die Ablagevorrichtung 10 kann zudem mit wenigen Modifikationen für unterschiedlich breite Fahrerhäuser verwendet werden, z. B. durch Verwendung von unterschiedlich breiten Varianten für das zweite Ablagefach 14.

Die Anbindung der Ablagevorrichtung 10 an das Fahrerhausdach 52 oder an die Dachstaufächer 54 erfolgt beispielsweise mittels Distanzschrauben 56 (siehe Figuren 1, 2, 5 und 6). Die Distanzschrauben 56 können die Ablagefächer 12, 14, 16 derart klemmen, dass diese sich unter thermischen Einflüssen noch ausdehnen und zusammenziehen können.

Die Figuren 8 bis 10 zeigen ein Ausführungsbeispiel für die Steckverbindungen 34 im Bereich der ersten Ablagefachs 12. Die übrigen Steckverbindungen 34 im Bereich des zweiten und dritten Ablagefachs 14, 16 können auf ähnliche Weise ausgeführt sein.

Die Steckverbindungen 34 weisen jeweils ein Langloch 34A, einen Zapfen 34B und ein Klammerelement 34C auf. Die Steckverbindungen 34 sind uneinsehbar auf einer Innenseite der Frontblende 18 angeordnet.

Die Langlöcher 34A erstrecken sich entlang der Querachse bzw. sind entlang der Querachse ausgerichtet. Die Langlöcher 34A sind in einer Frontseite bzw. Stirnseite des ersten Ablagefachs 12 angeordnet. Bei dem zweiten und dritten Ablagefach 14, 16 können die Langlöcher 34A vorzugsweise in Frontseiten der Blechversteifungsteile 30, 32 angeordnet sein (siehe Figur 1).

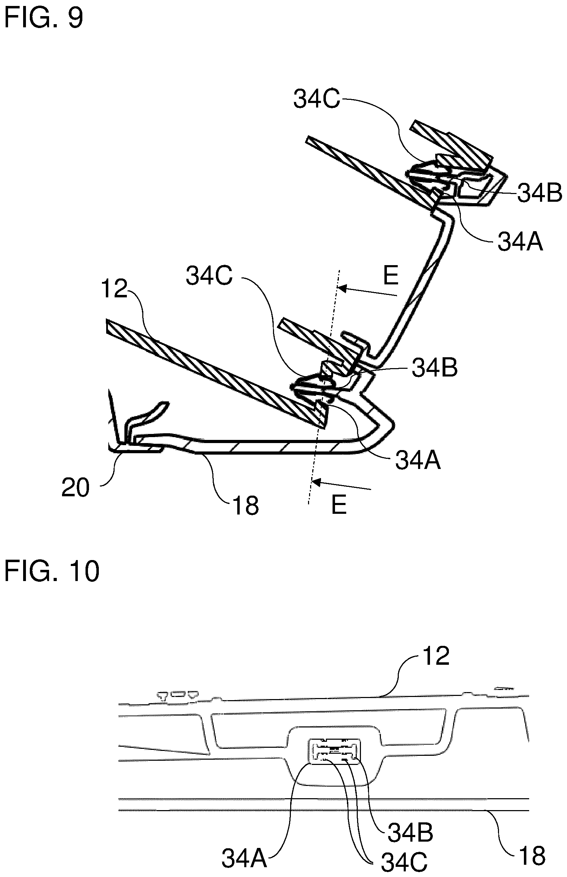

Die Zapfen 34B sind an einer Innenseite der Frontblende 18 angeordnet. Die Zapfen 34B können beispielsweise stabförmig sein. Es ist auch möglich, dass die Zapfen einen Doppel-T-förmigen bzw. H-förmigen Querschnitt aufweisen (siehe Figur 10).

Die Zapfen 34B sind durch die Langlöcher 34A gesteckt. Die Zapfen 34B sind in den Langlöchern 34A durch die lösbar aufgesteckten Klammerelemente 34C gesichert. Die Klammerelemente 34C sind lösbar an den Langlöchern 34A und den Zapfen 34B verrastet. Die Steckverbindungen 34 können somit als Rastverbindungen ausgeführt sein. Die Klammerelemente 34C können vorzugsweise als Omega-Klammerelemente ausgeführt sein, wie dargestellt ist.

Die Zapfen 34B sind bezüglich der Querachse mit Spiel in den Langlöchern 34A angeordnet. Die Langlöcher 34A lagern die Zapfen 34B somit bezüglich der Querachse verschiebbar, wodurch eine zerstörungsfreie Relativverschiebung bei thermischer Größenänderungen der Frontblende 18 und der Ablagefächer 12, 14, 16 ermöglicht wird.

Die Figur 8 zeigt auch die Anordnung der Ablagevorrichtung 10 oberhalb von einer Windschutzscheibe 58 des Kraftfahrzeugs.

Die Figuren 8 und 9 zeigen ferner ein Ausführungsbeispiel zur Verbindung der Bodenverkleidung 20 mit der Frontblende 18.

Wie erwähnt, ist die Bodenverkleidung 20 bezüglich der Querachse verschiebbar mit der Frontblende 18 verbunden. Dies kann beispielsweise dadurch ermöglich werden, dass eine Querendkante der Bodenverkleidung 20 eine Querendkante der Frontblende 18 gabelförmig umgreift. Die Bodenverkleidung 20 kann die Frontblende 18 z. B. C-förmig, U-förmig oder V-förmig umgreifen. Entlang des umgriffenen Abschnitts der Frontblende 18 ist eine Relativbewegung bezüglich der Querachse zwischen der Frontblende 18 und der Bodenverkleidung 20 möglich, wobei die Frontblende 18 und die Bodenverkleidung 20 sich in einer Vertikalrichtung weiterhin aneinander abstützen. Die Frontblende 18 und die Bodenverkleidung 20 können so aneinander entlanggleiten, um thermische Größenänderungen zerstörungsfrei auszugleichen. Eine umgekehrte Anordnung, in der die Frontblende die Bodenverkleidung umgreift, ist beispielsweise ebenfalls möglich.

Die Verbindungen mittels der Steckverbindungen 26 und/oder der Steckverbindungen 34 können derart ausgeführt sein, dass sie auch bei einem Unfall (z. B. Frontalaufprall oder Seitenaufprall) die Ablagefächer 12, 14 und 16 sicher zusammenhalten bzw. die Frontblende 18 sicher an den Ablagefächern 12, 14, 16 gehalten ist.

### Bezugszeichenliste

- 10: Ablagevorrichtung
- 12: Ablagefach
- 14: Ablagefach
- 16: Ablagefach
- 18: Frontblende
- 20: Bodenverkleidung
- 22: Adapterelement
- 24: Adapterelement
- 26: Steckverbindung
- 26A: Steckloch
- 26B: Schwenkarm
- 26C: Steckabschnitt
- 28: Steckverbindung
- 28A: Steckloch
- 28B: Schwenkarm
- 28C: Steckabschnitt
- 30: Blechversteifungsteil
- 32: Blechversteifungsteil
- 34: Steckverbindung
- 34A: Langloch
- 34B: Zapfen
- 34C: Klammerelement
- 36: Anlagefläche
- 38: Anlagefläche
- 40: Plattenförmige Erweiterung
- 42: Plattenförmige Erweiterung
- 44: Anlagefläche
- 46: Anlagefläche
- 48: Plattenförmige Erweiterung
- 50: Adapterplatte
- 52: (Fahrerhaus-) Dach
- 54: Dachstaufach
- 56: Distanzschraube
- 58: Windschutzscheibe

## Patentansprüche

1. Dachablagevorrichtung (10) eines Fahrerhauses eines Nutzfahrzeugs, aufweisend:
mehrere Ablagefächer (12, 14, 16); und
mindestens eine Steckverbindung (26, 28), die die mehreren Ablagefächer (12, 14, 16) miteinander verbindet,
**dadurch gekennzeichnet, dass** die mehreren Ablagefächer (12, 14, 16) entlang einer Querachse des Fahrerhauses oder Nutzfahrzeugs nebeneinander angeordnet sind, und die mindestens eine Steckverbindung (26, 28) bezüglich der Querachse verschiebbar gelagert ist.

2. Dachablagevorrichtung (10) nach Anspruch 1, wobei:
die mindestens eine Steckverbindung (26, 28) zum Ausgleich von Relativbewegungen zwischen den mehreren Ablagefächern (12, 14, 16) aufgrund von thermischen Dimensionsänderungen der mehreren Ablagefächer (12, 14, 16) bezüglich der Querachse verschiebbar ist; und/oder
die mindestens eine Steckverbindung (26, 28) als Rastverbindung ausgeführt ist.

3. Dachablagevorrichtung (10) nach Anspruch 1 oder Anspruch 2, wobei:
die mehreren Ablagefächer (12, 14, 16), vorzugsweise horizontal ausgerichtete, Anlageflächen (36, 38) zum gegenseitigen Abstützen aufweisen und die mindestens eine Steckverbindung (26, 28) in den Anlageflächen (36, 38) ausgebildet ist; und/oder
die mehreren Ablagefächer (12, 14, 16) an der mindestens einen Steckverbindung (26, 28) aufeinander geschoben sind.

4. Dachablagevorrichtung (10) nach einem der vorherigen Ansprüche, wobei:
die mindestens eine Steckverbindung (26, 28) ein Steckloch (26A, 28A) und einen Schwenkarm (26B, 28B) mit einem Steckabschnitt (26C, 28C) zum Einstecken in das Steckloch (26A, 28A) aufweist.

5. Dachablagevorrichtung (10) nach Anspruch 4, wobei mindestens eines der folgenden Merkmale erfüllt ist:
der Schwenkarm (26B, 28B) in einer Vertikalrichtung und/oder um eine Horizontalachse verschwenkbar ist;
der Schwenkarm (26B, 28B) elastisch verschwenkbar und/oder elastisch vorgespannt ist;
der Schwenkarm (26B, 28B) und der Steckabschnitt (26C, 28C) zusammen eine Rastnase bilden;
das Steckloch (26A, 28A) horizontal ausgerichtet ist;
das Steckloch (26A, 28A) und der Schwenkarm (26B, 28B) in einander gegenüberliegenden Anlageflächen (36, 38) der mehreren Ablagefächer (12, 14, 16) ausgebildet sind;
das Steckloch (26A, 28A) einem Ablagefach der mehreren Ablagefächer (12, 14, 16) und der Schwenkarm (26B, 28B) einem dazu benachbarten Ablagefach der mehreren Ablagefächer (12, 14, 16) zugeordnet ist;
der Steckabschnitt (26C, 28C) an einem freien Ende des Schwenkarms (26B, 28B) angeordnet ist;
der Steckabschnitt (26C, 28C) rampenförmig, doppelrampenförmig, konusförmig, nockenförmig, domförmig und/oder sich verjüngend ausgeführt ist;
der Steckabschnitt (26C, 28C) unter einer Wirkung des Schwenkarms (26B, 28B) selbstzentrierend in dem Steckloch (26A, 28A) ist; und
bei einer Relativbewegung zwischen dem Steckloch (26A, 28A) und dem Schwenkarm (26B, 28B) bezüglich der Querachse das Steckloch (26A, 28A) den Schwenkarm (26B, 28B) zu einer Vertikalschwenkbewegung beaufschlagt, wobei der Steckabschnitt (26C, 28C) in Eingriff mit dem Steckloch (26A, 28A) bleibt.

6. Dachablagevorrichtung (10) nach einem der vorherigen Ansprüche, wobei:
die mehreren Ablagefächer (12, 14, 16) zwei äußere Ablagefächer (12, 16) und ein mittleres Ablagefach (14), das zwischen den zwei äußeren Ablagefächern (12, 16) angeordnet ist, aufweisen; und
die mindestens eine Steckverbindung (26, 28) mehrere Steckverbindungen aufweist, die das mittlere Ablagefach (14) mit den zwei äußeren Ablagefächern (12, 16) verbindet.

7. Dachablagevorrichtung (10) nach Anspruch 6, wobei:
ein Ablagefach (12) der zwei äußeren Ablagefächer (12, 16) als ein Geräteträger ausgeführt ist;
der Geräteträger mittels eines ersten, vorzugsweise plattenförmigen, Adapterelements (50) linksseitig des mittleren Ablagefachs (14) an das mittlere Ablagefach (14) steckbar ist; und
der Geräteträger mittels eines zweiten, vorzugsweise plattenförmigen, Adapterelements (50) rechtsseitig des mittleren Ablagefachs (14) an das mittlere Ablagefach (14) steckbar ist.

8. Dachablagevorrichtung (10) nach einem der vorherigen Ansprüche, wobei:
die mehreren Ablagefächer (12, 14, 16) mittels der mindestens einen Steckverbindung (26, 28) eine Vormontageeinheit bilden, die als Ganzes montierbar ist.

9. Dachablagevorrichtung (10) nach Anspruch 8, wobei:
die mehreren Ablagefächer (12, 14, 16) in der Vormontageeinheit in einer, vorzugsweise selbstzentrierenden, Nulllage zueinander vormontiert sind, wobei die mindestens eine Steckverbindung (26, 28) aus der Nulllage heraus eine Relativbewegung zwischen den Ablagefächern (12, 14, 16) in beide Richtungen entlang der Querachse ermöglicht.

10. Dachablagevorrichtung (10) nach einem der vorherigen Ansprüche, ferner aufweisend:
eine Frontblende (18), die die mehreren Ablagefächer (12, 14, 16) verkleidet; und
mindestens eine weitere Steckverbindung (34), die die Frontblende (18) mit den Ablagefächern (12, 14, 16) verbindet, wobei die mindestens eine weitere Steckverbindung (34) bezüglich der Querachse verschiebbar gelagert ist, vorzugsweise zum Ausgleich von Relativbewegungen zwischen der Frontblende (18) und den mehreren Ablagefächer (12, 14, 16) aufgrund von thermischen Dimensionsänderungen der Frontblende (18) und/oder der mehreren Ablagefächer (12, 14, 16) bezüglich der Querachse.

11. Dachablagevorrichtung (10) nach Anspruch 10, wobei mindestens eines der folgenden Merkmale erfüllt ist:
die Frontblende (18) integral-einstückig ausgeführt ist;
die Frontblende (18) alle Ablagefächer der mehreren Ablagefächer (12, 14, 16) verkleidet;
die Frontblende (18) sich entlang einer gesamten Breite der mehreren Ablagefächer (12, 14, 16) erstreckt; und
die Frontblende (18) die mehreren Ablagefächer (12, 14, 16) frontseitig verkleidet.

12. Dachablagevorrichtung (10) nach Anspruch 10 oder Anspruch 11, wobei mindestens eines der folgenden Merkmale erfüllt ist:
die mindestens eine weitere Steckverbindung (34) als eine Rastverbindung ausgeführt ist;
die mindestens eine weitere Steckverbindung (34) in mindestens einem Langloch (34A) bezüglich der Querachse verschiebbar gelagert ist;
die mindestens eine weitere Steckverbindung (34) uneinsehbar auf einer Innenseite der Frontblende (18) angeordnet ist;
mindestens ein Ablagefach (14, 16) der mehrere Ablagefächer (12, 14, 16) ein Blechversteifungsteil (30, 32) aufweist, in dem mindestens ein Langloch (34A) angeordnet ist, das eine der mindestens einen weiteren Steckverbindung (34) bezüglich der Querachse verschiebbar lagert;
die mindestens eine weitere Steckverbindung (34) einen Zapfen (34B) und ein Klammerelement (34C), vorzugweise eine Omega-Klammerelement, aufweist; und
die mindestens eine weitere Steckverbindung (34) einen in einem entlang der Querachse ausgerichteten Langloch (34A) verschiebbar gelagerten Zapfen (34B) und ein Klammerelement (34C), das auf den Zapfen (34B) lösbar aufgesteckt ist, aufweist.

13. Dachablagevorrichtung (10) nach einem der Ansprüche 10 bis 12, ferner aufweisend:
eine Bodenverkleidung (20), die die mehreren Ablagefächer (12, 14, 16) von unten verkleidet, wobei die Bodenverkleidung (20) bezüglich der Querachse verschiebbar mit der Frontblende (18) verbunden ist, vorzugsweise zum Ausgleich von Relativbewegungen zwischen der Frontblende (18) und der Bodenverkleidung (20) aufgrund von thermischen Dimensionsänderungen der Frontblende (18) und/oder der Bodenverkleidung (20) bezüglich der Querachse.

14. Dachablagevorrichtung (10) nach Anspruch 13, wobei die Bodenverkleidung (20) dadurch bezüglich der Querachse verschiebbar mit der Frontblende (18) verbunden ist, dass:
die Bodenverkleidung (20) die Frontblende (18) entlang der Querachse umgreift, vorzugsweise gabelförmig, V-förmig, U-förmig oder C-förmig; oder
die Frontblende (18) die Bodenverkleidung (20) entlang der Querachse umgreift, vorzugsweise gabelförmig, V-förmig, U-förmig oder C-förmig.

15. Kraftfahrzeug, aufweisend:
ein Dach (52); und
eine Dachablagevorrichtung (10) nach einem der vorherigen Ansprüche, wobei die Ablagevorrichtung (10) in dem Dach (52) angeordnet ist.

## Claims

1. A roof storage device (10) of a cab of a commercial vehicle, having:
a plurality of storage compartments (12, 14, 16); and
at least one plug connection (26, 28) which connects the plurality of storage compartments (12, 14, 16) to one another,
**characterized in that** the plurality of storage compartments (12, 14, 16) are disposed next to one another along a transverse axis of the cab or commercial vehicle, and the at least one plug connection (26, 28) is mounted so as to be displaceable relative to the transverse axis.

2. The roof storage device (10) according to Claim 1, wherein:
the at least one plug connection (26, 28) for compensating relative movements between the plurality of storage compartments (12, 14, 16) owing to thermal dimensional variations of the plurality of storage compartments (12, 14, 16) is displaceable relative to the transverse axis; and/or
the at least one plug connection (26, 28) is embodied as a latching connection.

3. The roof storage device (10) according to Claim 1 or Claim 2, wherein:
the plurality of storage compartments (12, 14, 16) for mutual support have preferably horizontally aligned contact faces (36, 38), and the at least one plug connection (26, 28) is configured in the contact faces (36, 38); and/or
the plurality of storage compartments (12, 14, 16) are pushed onto one another at the at least one plug connection (26, 28).

4. The roof storage device (10) according to one of the preceding claims, wherein:
the at least one plug connection (26, 28) has a socket hole (26A, 28A) and a pivot arm (26B, 28B) having an insertion portion (26C, 28C) for inserting into the socket hole (26A, 28A).

5. The roof storage device (10) according to Claim 4, wherein at least one of the following features is met:
the pivot arm (26B, 28B) is pivotable in a vertical direction and/or about a horizontal axis;
the pivot arm (26B, 28B) is elastically pivotable and/or elastically pre-tensioned;
the pivot arm (26B, 28B) and the insertion portion (26C, 28C) conjointly form a latching cam;
the socket hole (26A, 28A) is horizontally aligned; the socket hole (26A, 28A) and the pivot arm (26B, 28B) are configured in mutually opposite contact faces (36, 38) of the plurality of storage compartments (12, 14, 16);
the socket hole (26A, 28A) is assigned to one storage compartment of the plurality of storage compartments (12, 14, 16), and the pivot arm (26B, 28B) is assigned to a storage compartment of the plurality of storage compartments (12, 14, 16) that is adjacent to the former;
the insertion portion (26C, 28C) is disposed on a free end of the pivot arm (26B, 28B);
the insertion portion (26C, 28C) is embodied in the shape of a ramp, a double ramp, a cone, a cam, a dome and/or so as to taper;
the insertion portion (26C, 28C) under the effect of the pivot arm (26B, 28B) is self-centring in the socket hole (26A, 28A); and
in a relative movement between the socket hole (26A, 28A) and the pivot arm (26B, 28B) relative to the transverse axis, the socket hole (26A, 28A) impinges on the pivot arm (26B, 28B) so as to perform a vertical pivoting movement, wherein the insertion portion (26C, 28C) remains engaged in the socket hole (26A, 28A).

6. The roof storage device (10) according to one of the preceding claims, wherein:
the plurality of storage compartments (12, 14, 16) have two outer storage compartments (12, 16) and a central storage compartment (14) which is disposed between the two outer storage compartments (12, 16); and
the at least one plug connection (26, 28) has a plurality of plug connections which connect the central storage compartment (14) to the two outer storage compartments (12, 16).

7. The roof storage device (10) according to Claim 6, wherein:
one storage compartment (12) of the two outer storage compartments (12, 16) is embodied as an apparatus carrier;
the apparatus carrier by means of a first, preferably board-shaped, adapter element (50) on the left side of the central storage compartment (14) is able to be plugged to the central storage compartment (14); and
the apparatus carrier by means of a second, preferably board-shaped, adapter element (50) on the right side of the central storage compartment (14) is able to be plugged to the central storage compartment (14).

8. The roof storage device (10) according to one of the preceding claims, wherein:
the plurality of storage compartments (12, 14, 16) by means of the at least one plug connection (26, 28) form a pre-assembled unit which is able to be assembled as an entity.

9. The roof storage device (10) according to Claim 8, wherein:
the plurality of storage compartments (12, 14, 16) in the pre-assembled unit are mutually pre-assembled in a, preferably self-centring, home position, wherein the at least one plug connection (26, 28) from the home position enables a relative movement between the storage compartments (12, 14, 16) in both directions along the transverse axis.

10. The roof storage device (10) according to one of the preceding claims, furthermore having:
a front panel (18) which clads the plurality of storage compartments (12, 14, 16); and
at least one further plug connection (34) which connects the front panel (18) to the storage compartments (12, 14, 16), wherein the at least one further plug connection (34) is mounted so as to be displaceable relative to the transverse axis, preferably for compensating relative movements between the front panel (18) and the plurality of storage compartments (12, 14, 16) owing to thermal dimensional variations of the front panel (18) and/or of the plurality of storage compartments (12, 14, 16) relative to the transverse axis.

11. The roof storage device (10) according to Claim 10, wherein at least one of the following features is met:
the front panel (18) is integrally embodied in one piece;
the front panel (18) clads all storage compartments of the plurality of storage compartments (12, 14, 16) ;
the front panel (18) extends along an entire width of the plurality of storage containers (12, 14, 16); and
the front panel (18) clads the front side of the plurality of storage compartments (12, 14, 16).

12. The roof storage device (10) according to Claim 10 or Claim 11, wherein at least one of the following features is met:
the at least one further plug connection (34) is embodied as a latching connection;
the at least one further plug connection (34) is mounted in at least one slot (34A) so as to be displaceable relative to the transverse axis;
the at least one further plug connection (34) is disposed so as be secluded on an inside of the front panel (18);
at least one storage compartment (14, 16) of the plurality of storage compartments (12, 14, 16) has a sheet-metal reinforcement part (30, 32) in which at least one slot (34A) is disposed, the latter mounting one of the at least one further plug connection (34) so as to be displaceable relative to the transverse axis;
the at least one further plug connection (34) has a stud (34B) and a clip element (34C), preferably an omega clip element; and
the at least one further plug connection (34) has a stud (34B) which is displaceably mounted in a slot (34A) aligned along the transverse axis, and a clip element (34C) which is releasably clipped onto the stud (34B).

13. The roof storage device (10) according to one of Claims 10 to 12, furthermore having:
a base cladding (20) which clads the plurality of storage compartments (12, 14, 16) from below, wherein the base cladding (20) is connected to the front panel (18) so as to be displaceable relative to the transverse axis, preferably for compensating relative movements between the front panel (18) and the base cladding (20) owing to thermal dimensional variations of the front panel (18) and/or of the base cladding (20) relative to the transverse axis.

14. The roof storage device (10) according to Claim 13, wherein the base cladding (20) is connected to the front panel (18) so as to be displaceable relative to the transverse axis in that:
the base cladding (20) encompasses the front panel (18), preferably in the shape of a fork, or in a V-shaped, U-shaped or C-shaped manner, along the transverse axis; or
the front panel (18) encompasses the base cladding (20), preferably in the shape of a fork, or in a V-shaped, U-shaped or C-shaped manner, along the transverse axis.

15. A motor vehicle having:
a roof (52); and
a roof storage device (10) according to one of the preceding claims, wherein the storage device (10) is disposed in the roof (52).

## Revendications

1. Dispositif de rangement de toit (10) d'une cabine de conducteur d'un véhicule utilitaire, présentant :
une pluralité de compartiments de rangement (12, 14, 16) ; et
au moins une connexion enfichable (26, 28) qui relie la pluralité de compartiments de rangement (12, 14, 16) entre eux,
**caractérisé en ce que** la pluralité de compartiments de rangement (12, 14, 16) sont agencés côte à côte le long d'un axe transversal de la cabine de conducteur ou du véhicule utilitaire, et l'au moins une connexion enfichable (26, 28) est montée de manière coulissante par rapport à l'axe transversal.

2. Dispositif de rangement de toit (10) selon la revendication 1, dans lequel :
l'au moins une connexion enfichable (26, 28) peut être coulissée par rapport à l'axe transversal pour compenser des mouvements relatifs entre la pluralité de compartiments de rangement (12, 14, 16) en raison de variations dimensionnelles thermiques de la pluralité de compartiments de rangement (12, 14, 16) ; et/ou
l'au moins une connexion enfichable (26, 28) est conçue sous forme de connexion par encliquetage.

3. Dispositif de rangement de toit (10) selon la revendication 1 ou la revendication 2, dans lequel :
la pluralité de compartiments de rangement (12, 14, 16) présentent des surfaces d'application (36, 38), de préférence orientées horizontalement, pour l'appui mutuel, et l'au moins une connexion enfichable (26, 28) est réalisée dans les surfaces d'application (36, 38) ; et/ou
la pluralité de compartiments de rangement (12, 14, 16) sont poussés les uns sur les autres au niveau de l'au moins une connexion enfichable (26, 28).

4. Dispositif de rangement de toit (10) selon l'une quelconque des revendications précédentes, dans lequel :
l'au moins une connexion enfichable (26, 28) présente un trou d'enfichage (26A, 28A) et un bras pivotant (26B, 28B) avec une section d'enfichage (26C, 28C) pour l'enfichage dans le trou d'enfichage (26A, 28A) .

5. Dispositif de rangement de toit (10) selon la revendication 4, dans lequel au moins l'une des caractéristiques suivantes est satisfaite :
le bras pivotant (26B, 28B) peut pivoter dans une direction verticale et/ou autour d'un axe horizontal ;
le bras pivotant (26B, 28B) peut pivoter de manière élastique et/ou est précontraint de manière élastique ;
le bras pivotant (26B, 28B) et la section d'enfichage (26C, 28C) forment ensemble un ergot d'encliquetage ;
le trou d'enfichage (26A, 28A) est orienté horizontalement ;
le trou d'enfichage (26A, 28A) et le bras pivotant (26B, 28B) sont réalisés dans des surfaces d'applications opposées l'une à l'autre (36, 38) de la pluralité de compartiments de rangement (12, 14, 16) ; et
le trou d'enfichage (26A, 28A) est associé à un compartiment de rangement de la pluralité de compartiments de rangement (12, 14, 16) et le bras pivotant (26B, 28B) est associé à un compartiment de rangement voisin de la pluralité de compartiments de rangement (12, 14, 16) ;
la section d'enfichage (26C, 28C) est agencée à une extrémité libre du bras pivotant (26B, 28B) ;
la section d'enfichage (26C, 28C) est conçue en forme de rampe, en forme de double rampe, en forme de cône, en forme de came, en forme de dôme et/ou sous forme effilée ;
la section d'enfichage (26C, 28C) est à centrage automatique dans le trou d'enfichage (26A, 28A) sous une action du bras pivotant (26B, 28B) ; et
lors d'un mouvement relatif entre le trou d'enfichage (26A, 28A) et le bras pivotant (26B, 28B) par rapport à l'axe transversal, le trou d'enfichage (26A, 28A) sollicite le bras pivotant (26B, 28B) en un mouvement de pivotement vertical, la section d'enfichage (26C, 28C) restant en prise avec le trou d'enfichage (26A, 28A).

6. Dispositif de rangement de toit (10) selon l'une quelconque des revendications précédentes, dans lequel :
la pluralité de compartiments de rangement (12, 14, 16) présentent deux compartiments de rangement extérieurs (12, 16) et un compartiment de rangement central (14) agencé entre les deux compartiments de rangement extérieurs (12, 16) ; et
l'au moins une connexion enfichable (26, 28) présente plusieurs connexions enfichables qui relient le compartiment de rangement central (14) aux deux compartiments de rangement extérieurs (12, 16).

7. Dispositif de rangement de toit (10) selon la revendication 6, dans lequel :
un compartiment de rangement (12) parmi les deux compartiments de rangement extérieurs (12, 16) est conçu sous la forme d'un support d'appareil ;
le support d'appareil peut être enfiché sur le compartiment de rangement central (14) au moyen d'un premier élément adaptateur (50), de préférence en forme de plaque, du côté gauche du compartiment de rangement central (14) ; et
le support d'appareil peut être enfiché sur le compartiment de rangement central (14) au moyen d'un deuxième élément adaptateur (50), de préférence en forme de plaque, du côté droit du compartiment de rangement central (14).

8. Dispositif de rangement de toit (10) selon l'une quelconque des revendications précédentes, dans lequel :
la pluralité de compartiments de rangement (12, 14, 16) forment, au moyen de l'au moins une connexion enfichable (26, 28), une unité de prémontage qui peut être montée en tant qu'ensemble.

9. Dispositif de rangement de toit (10) selon la revendication 8, dans lequel :
la pluralité de compartiments de rangement (12, 14, 16) sont prémontés dans l'unité de prémontage dans une position zéro, de préférence à centrage automatique, les uns par rapport aux autres, l'au moins une connexion enfichable (26, 28) permettant un mouvement relatif entre les compartiments de rangement (12, 14, 16) dans les deux directions le long de l'axe transversal à partir de la position zéro.

10. Dispositif de rangement de toit (10) selon l'une quelconque des revendications précédentes, présentant en outre :
un panneau avant (18) qui habille la pluralité de compartiments de rangement (12, 14, 16) ; et
au moins une autre connexion enfichable (34) qui relie le panneau avant (18) aux compartiments de rangement (12, 14, 16), l'au moins une autre connexion enfichable (34) étant montée de manière coulissante par rapport à l'axe transversal, de préférence pour compenser des mouvements relatifs entre le panneau avant (18) et la pluralité de compartiments de rangement (12, 14, 16) en raison de variations dimensionnelles thermiques du panneau avant (18) et/ou de la pluralité de compartiments de rangement (12, 14, 16) par rapport à l'axe transversal.

11. Dispositif de rangement de toit (10) selon la revendication 10, dans lequel au moins l'une des caractéristiques suivantes est satisfaite :
le panneau avant (18) est conçu d'un seul tenant ;
le panneau avant (18) habille tous les compartiments de rangement de la pluralité de compartiments de rangement (12, 14, 16) ;
le panneau avant (18) s'étend le long d'une largeur totale de la pluralité de compartiments de rangement (12, 14, 16) ; et
le panneau avant (18) habille la pluralité de compartiments de rangement (12, 14, 16) sur le côté avant.

12. Dispositif de rangement de toit (10) selon la revendication 10 ou la revendication 11, dans lequel au moins l'une des caractéristiques suivantes est satisfaite :
l'au moins une autre connexion enfichable (34) est conçue sous la forme d'une connexion par encliquetage ;
l'au moins une autre connexion enfichable (34) est montée de manière coulissante par rapport à l'axe transversal dans au moins un trou oblong (34A) ;
l'au moins une autre connexion enfichable (34) est agencée de manière non visible sur un côté intérieur du panneau avant (18) ;
au moins un compartiment de rangement (14, 16) de la pluralité de compartiments de rangement (12, 14, 16) présente une pièce de renforcement en tôle (30, 32) dans laquelle est agencé au moins un trou oblong (34A) qui monte l'une de l'au moins une autre connexion enfichable (34) de manière coulissante par rapport à l'axe transversal ;
l'au moins une autre connexion enfichable (34) présente un tenon (34B) et un élément de serrage (34C), de préférence un élément de serrage en oméga ; et
l'au moins une autre connexion enfichable (34) présente un tenon (34B) monté de manière coulissante dans un trou oblong (34A) orienté le long de l'axe transversal et un élément de serrage (34C) qui est enfiché de manière amovible sur le tenon (34B).

13. Dispositif de rangement de toit (10) selon l'une quelconque des revendications 10 à 12, présentant en outre :
un habillage de fond (20) qui habille la pluralité de compartiments de rangement (12, 14, 16) par le dessous, l'habillage de fond (20) étant relié au panneau avant (18) de manière coulissante par rapport à l'axe transversal, de préférence pour compenser des mouvements relatifs entre le panneau avant (18) et l'habillage de fond (20) en raison de variations dimensionnelles thermiques du panneau avant (18) et/ou de l'habillage de fond (20) par rapport à l'axe transversal.

14. Dispositif de rangement de toit (10) selon la revendication 13, dans lequel l'habillage de fond (20) est relié au panneau avant (18) de manière coulissante par rapport à l'axe transversal, en ce que :
l'habillage de fond (20) entoure le panneau avant (18) le long de l'axe transversal, de préférence en forme de fourche, en forme de V, en forme de U ou en forme de C ; ou
le panneau avant (18) entoure l'habillage de fond (20) le long de l'axe transversal, de préférence en forme de fourche, en forme de V, en forme de U ou en forme de C.

15. Véhicule automobile, présentant :
un toit (52) ; et
un dispositif de rangement de toit (10) selon l'une quelconque des revendications précédentes, le dispositif de rangement (10) étant agencé dans le toit (52).
